(19) Europäisches Patentamt
European Patent Office
Office européen des brevets

(11) Veröffentlichungsnummer: **0 039 308**
**B1**

(12) **EUROPÄISCHE PATENTSCHRIFT**

(45) Veröffentlichungstag der Patentschrift: **08.02.84**

(51) Int. Cl.³: **C 07 C131/02**, A 01 N 47/12, C 07 C149/26

(21) Anmeldenummer: **81810149.5**

(22) Anmeldetag: **16.04.81**

# (54) Cyclobutanonoximcarbamate, Verfahren zu ihrer Herstellung und ihre Verwendung in der Schädlingsbekämpfung sowie die als Zwischenprodukte dienenden Cyclobutanonoxime.

(30) Priorität: **24.04.80 CH 3170/80**
**16.02.81 CH 1007/81**

(43) Veröffentlichungstag der Anmeldung: **04.11.81 Patentblatt 81/44**

(45) Bekanntmachung des Hinweises auf die Patenterteilung: **08.02.84 Patentblatt 84/06**

(84) Benannte Vertragsstaaten: **AT BE CH DE FR GB IT LI NL**

(56) Entgegenhaltungen:
**US-A- 2 447 583**
**US-A- 3 063 823**
**US-A- 3 479 405**

(73) Patentinhaber: **CIBA-GEIGY AG**
**Patentabteilung Postfach**
**CH-4002 Basel (CH)**

(72) Erfinder: **Gsell, Laurenz, Dr.**
**Maiengasse 56**
**CH-4056 Basel (CH)**
Erfinder: **Gehret, Jean-Claude, Dr.**
**Im Aeschfeld 12**
**CH-4147 Aesch (CH)**

**EP 0 039 308 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Cyclobutanonoximcarbamate, Verfahren zu ihrer Herstellung und ihre Verwendung in der Schädlingsbekämpfung sowie die als Zwischenprodukte dienenden Cyclobutanonoxime

Die vorliegende Erfindung betrifft Cyclobutanonoximcarbamate, Verfahren zu ihrer Herstellung und ihre Verwendung in der Schädlingsbekämpfung sowie die als Zwischenprodukte dienenden Cyclobutanonoxime.

Es ist bereits bekannt, dass Cycloalkylcarbamoyloxime mit elektronegativen Gruppen substituiert insektizide Eigenschaften besitzen (vgl. U.S.P. 3,479,405).

Es wurde gefunden, dass sich Cyclobutanonoximcarbamate, nur durch elektropositive Gruppen substituiert, der Formel

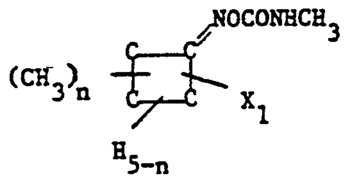

(I)

worin

n die Zahlen 1 bis 5 und

$X_1$ Wasserstoff, Halogen, $C_1$-$C_4$-Alkoxy oder $C_1$-$C_4$-Alkylthio bedeuten, durch eine starke insektizide, insbesondere aphizide Wirksamkeit auszeichnen.

Unter Halogen ist dabei Fluor, Chlor, Brom oder Jod, insbesondere aber Chlor, zu verstehen.

Die für $X_1$ stehenden Alkoxy- und Alkylthiogruppen können geradkettig oder verzweigt sein. Beispiele solcher Gruppen sind u. a.: Methoxy, Methylthio, Aethoxy, Aethylthio, Propoxy, Propylthio, Isopropoxy, Isopropylthio, n-Butoxy, n-Butylthio.

Wegen ihrer Wirkung bevorzugt sind Verbindungen der Formel I, worin

n die Zahlen 1 bis 4 und

$X_1$ Wasserstoff, Chlor, Methoxy, Aethoxy oder Methylthio bedeuten.

Insbesondere bevorzugt sind aber Verbindungen der Formel II

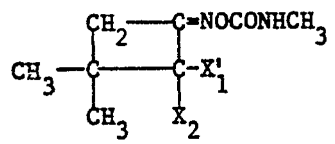

(II)

worin

$X_1'$ Wasserstoff, Chlor oder Methylthio und

$X_2$ Wasserstoff oder Methyl bedeuten.

Die Verbindungen der Formel I können nach der an sich bekannten Methode wie folgt hergestellt werden:

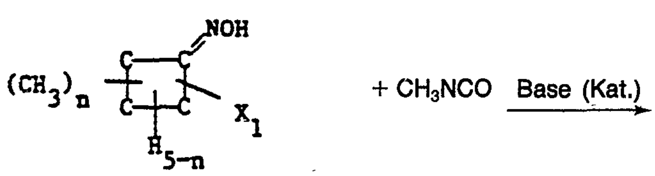


(I)

(III)

In der Formel III haben n und $X_1$ die für die Formel I angegebene Bedeutung. Als geeignete Basen für dieses Verfahren kommen insbesondere tertiäre Amine wie Trialkylamine, Dialkylaniline und Pyridine in Betracht.

Die Verbindungen der Formeln I bis III können in verschiedenen stereoisomeren Formen vorliegen. Unter den Verbindungen der Formeln I, II und III verstehen wir daher sowohl einzelne Stereoisomere sowie Stereoisomerengemische.

Das Verfahren wird bei normalem Druck, bei einer Temperatur von − 25 bis 150 °C, vorzugsweise bei 0 bis 100 °C und in einem Lösungs- oder Verdünnungsmittel durchgeführt.

Als Lösungs- oder Verdünnungsmittel eignen sich z. B. Aether und ätherartige Verbindungen wie Diäthyläther, Diisopropyläther, Dioxan oder Tetrahydrofuran; aromatische Kohlenwasserstoffe wie Benzol, Toluol und Xylole; Ketone wie Aceton, Methyläthylketon oder Cyclohexanon; Nitrile wie Acetonitril; Ester wie Aethylacetat oder Butylacetat; sowie Dimethylformamid, Dimethylsulfoxid und halogenierte Kohlenwasserstoffe. Die Ausgangsstoffe der Formel III sind neu, können aber nach bekannten Verfahren hergestellt werden (vgl. Beispiel 1).

Die Verbindungen der Formel I eignen sich zur Bekämpfung von Tier- und Pflanzen-Schädlingen. Sie haben z. B. eine günstige Wirkung gegen phytopathogene Mikroorganismen und Nematoden.

Insbesondere eignen sich die Verbindungen der Formel I aber zur Bekämpfung aller Entwicklungsstadien von Insekten, z. B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera sowie von Milben und Zecken der Ordnung Acarina.

Vor allem eigen sich die Verbindungen der Formel I zur Bekämpfung von pflanzenschädigenden Insekten, insbesondere pflanzenschädigenden Frassinsekten und saugenden Insekten, in Zier- und Nutzpflanzen, insbesondere in Baumwollkulturen (z. B. Anthonomus grandis) und Gemüsekulturen (z. B. Leptinotarsa decemlineata, Aphis craccivora und Myzus persicae).

Daneben zeichnen sich die Verbindungen der Formel I durch eine breite ovizide und ovolarvizide Wirkung aus.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_7$ bis $C_{12}$, wie z. B. Toluol, Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyl äther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kobosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Polarität des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder- sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylen-oxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzosulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxyd-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)äthylammonium-bromid.

Die in der Formulierungstechnik gebräuchlichen Tenside sind u. a. in folgender Publikation beschrieben :

« Mc Cutcheon's Detergents and Emulsifiers Annual » MC Publishing Corp., Ringwood New Jersey, 1979.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I (% = Gewichtsprozent)

| 1. Emulsions-Konzentrate | a) | b) | c) |
|---|---|---|---|
| Wirkstoff | 20 % | 40 % | 50 % |
| Ca-Dodecylbenzolsulfonat | 5 % | 8 % | 5,8 % |
| Ricinusöl-polyäthylenglykoläther (36 Mol AeO) | 5 % | — | — |
| Tributylphenoyl-polyäthylenglykoläther (30 Mol AeO) | — | 12 % | 4,2 % |
| Cyclohexanon | — | 15 % | 20 % |
| Xylolgemisch | 70 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80 % | 10 % | 5 % | 95 % |
| Aethylenglykol-monomethyl-äther | 20 % | — | — | — |
| Polyäthylenglykol MG 400 | — | 70 % | — | — |
| N-Methyl-2-pyrrolidon | — | 20 % | — | — |
| Epoxydiertes Kokosnussöl | — | — | 1 % | 5 % |
| Benzin (Siedegrenzen 160-190 °C) | — | — | 94 % | — |

Die Lösungen sind zur Anwendung in Form kleinster Tropfen geeignet.

| 3. Granulate | a) | b) |
|---|---|---|
| Wirkstoff | 5 % | 10 % |
| Kaolin | 94 % | — |
| Hochdisperse Kieselsäure | 1 % | |
| Attapulgit | — | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff | 2 % | 5 % |
| Hochdisperse Kieselsäure | 1 % | 5 % |
| Talkum | 97 % | — |
| Kaolin | — | 90 % |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

5. Spritzpulver

| | a) | b) |
|---|---|---|
| Wirkstoff | 20 % | 60 % |
| Na-Ligninsulfonat | 5 % | 5 % |
| Na-Laurylsulfat | 3 % | — |
| Na-Diisobutylnaphthalinsulfonat | — | 6 % |
| Octylphenolpolyäthylenglykoläther (7-8 Mol AeO) | — | 2 % |
| Hochdisperse Kieselsäure | 5 % | 27 % |
| Kaolin | 67 % | — |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsion jeder gewünschten Konzentration hergestellt werden.

7. Stäubemittel

| | a) | b) |
|---|---|---|
| Wirkstoff | 5 % | 8 % |
| Talkum | 95 % | — |
| Kaolin | — | 92 % |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

9. Umhüllungs-Granulat

| | |
|---|---|
| Wirkstoff | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

10. Suspensions-Konzentrat

| | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |

| | |
|---|---|
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 1

Herstellung von 2-Methylthio-3,3-dimethylcyclobutanonoxim-N-methylcarbamat

a) Herstellung von 2-Chlor-3-dimethyl-cyclobutanonoxim.

38,2 g Hydroxylaminhydrochlorid, in 150 ml heissem Methanol gelöst, werden zu 33 g 85 %igem Kaliumhydroxyd, gelöst in 75 ml heissem Methanol, gegeben. Nach dem Abkühlen wird das Kaliumchlorid abfiltriert und bei 10 bis 25 °C 66,25 g 2-Chlor-3-dimethylcyclobutanon zugetropft. Nach 2 Stunden wird das Lösungsmittel abgedampft und der Rückstand aus Methylenchlorid/Hexan (1 : 1) umkristallisiert. Man erhält die Verbindung der Formel

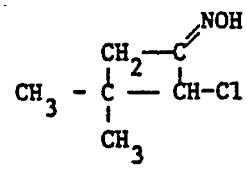

mit einem Schmelzpunkt von 64-68 °C.

Auf analoge Weise werden auch folgende Oxime hergestellt :

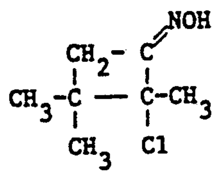

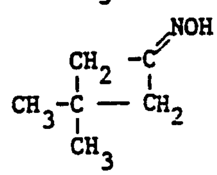

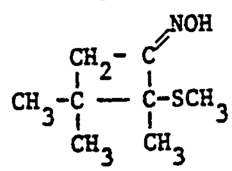

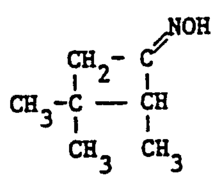

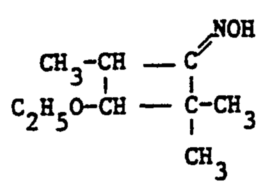

$n_D^{20°} = 1,460$

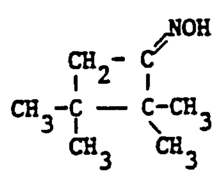

$n_D^{20°} = 1,468$

b) Herstellung von 2-Methylthio-3,3-dimethylcyclobutanonoxim.

In eine Lösung von 5,7 g Natriummethylat in 100 ml Methanol werden bei – 10 °C 5,6 g Methylmercaptan eingeleitet und bei 0 °C 15,7 g 2-Chlor-3-dimethylcyclobutanonoxim gelöst in 50 ml Methanol zugetropft. Nach dreistündigem Rühren bei 50 °C wird das ausgefallene Salz abfiltriert, ein Teil des Methanols abgedampft, 100 ml Wasser zugesetzt und mit 100 ml Methylenchlorid ausgeschüttelt. Die Methylenchloridphase wird mit Wasser gewaschen, mit Natriumsulfat getrocknet und eingeengt. Nach der chromatographischen Reinigung des Rohproduktes mit Aether/Hexan (1 : 1) als Eluiermittel erhält man die Verbindung der Formel

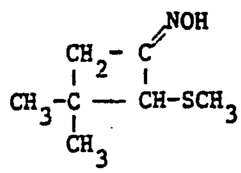

welche ohne weitere Reinigung zum Oximcarbamat umgesetzt werden kann.

c) Herstellung des Endproduktes.

Bei 20 °C werden 4,5 g Methylisocyanat und 3 Tropfen Triäthylamin zu 9,6 g rohem 2-Methylthio-3,3-dimethyl-butanonoxim in 100 ml Aceton zugegeben. Das Reaktionsgemisch wird 12 Stunden bei 70 °C gehalten. Nach dem Entfernen des Lösungsmittels und dem Ueberschuss von Methylisocyanat wird das Rohprodukt mittels Aether/Hexan (1 : 3) als Eluiermittel chromatographiert. Man erhält die Verbindung der Formel

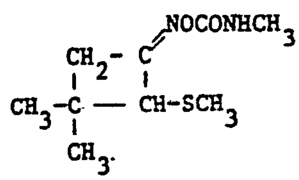

und einer Refraktion von $n_D^{20} = 1{,}518\ 8$

Auf analoge Weise werden auch folgende Verbindungen hergestellt :

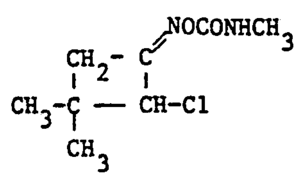

$n_D^{20°} = 1{,}501\ 0$

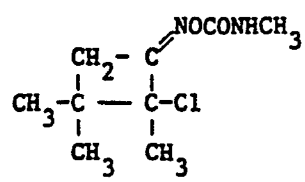

$n_D^{20°} = 1{,}496\ 0$

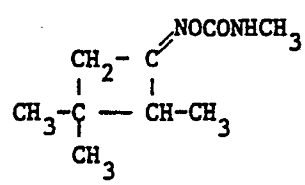

$n_D^{20°} = 1{,}477$

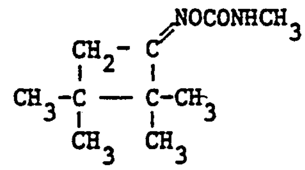

Smp. 83-88 °C

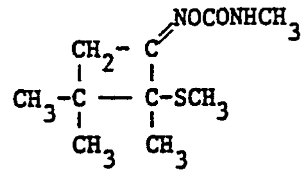

halbfest

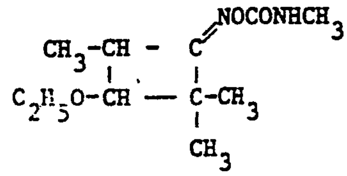

$n_D^{20°} = 1,471\,6$

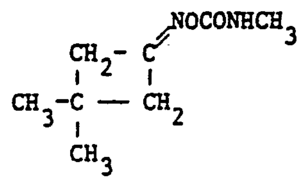

Smp. 55-65 °C

Beispiel 2

Wirkung auf Spodoptera littoralis und Heliothis virescens (Eier)

Es wurden drei in Töpfen gezogene Baumwollpflanzen von ca. 15-20 cm Höhe mit einer sprühfähigen flüssigen Zubereitung des zu prüfenden Wirkstoffes behandelt. Nach Antrocknen des Sprühbelages wurden die eingetopften Pflanzen in ein Blechgefäss von etwa 20 Litern Inhalt gestellt, das mit einer Glasplatte abgedeckt wurde. Die Feuchtigkeit im Inneren des abgedeckten Gefässes wurde so reguliert, dass sich kein Kondenswasser bildete. Direktes, auf die Pflanzen fallendes Licht wurde vermieden. Dann wurden die Pflanzen infestiert, und zwar mit : zwei Eispiegeln von Spodoptera littoralis bzw. Heliothis virescens. Dazu wurden je 2 Blätter einer Pflanze in einem beidseitig mit Gaze verschlossenen Plexiglaszylinder eingeschlossen ; zwei Eispiegel von Spodoptera bzw. ein Teil eines Baumwollblattes mit darauf abgelegten Eiern von Heliothis wurden zu den eingeschlossenen Blättern gegeben.

Nach 4 bis 5 Tagen erfolgte die Auswertung gegenüber unbehandelten Kontrollen anhand der Schlupfrate (Anzahl der aus den Eiern geschlüpften Larven).

Die Verbindungen gemäss Beispiel 1 zeigten gute ovolarvizide Wirksamkeit in obigem Test.

Beispiel 3

Systemisch-insektizide Wirkung gegen Aphis fabae

Zur Feststellung der systemischen Wirkung wurden bewurzelte Bohnenpflanzen (Vicia faba) in eine 0,01 %ige wässrige Wirkstofflösung (erhalten aus einem 10 %igen emulgierbaren Konzentrat) eingestellt. Nach 24 Stunden wurden auf die oberirdischen Pflanzenteile Blattläuse (Aphis fabae) gesetzt. Durch eine spezielle Einrichtung waren die Tiere vor der Kontakt- und Gaswirkung geschützt. Der Versuch wurde bei 24 °C und 70 % relativer Luftfeuchtigkeit durchgeführt.

Verbindungen gemäss Beispiel 1 zeigten im obigen Test systemisch insektizide Wirkung gegen Aphis fabae.

Beispiel 4

Insektizide Kontakt-Wirkung : Aphis craccivora und Myzus persicae

In Töpfen angezogene Pflanzen (Vicia faba) wurden vor dem Versuchsbeginn je mit ca. 200 Individuen der Spezies Aphis craccivora oder Myzus persicae besiedelt. Die so behandelten Pflanzen wurden 24 Stunden später mit einer Lösung enthaltend 200 oder 100 ppm der zu prüfenden Verbindung bis zur Tropfnässe besprüht. Man verwendete pro Test-Verbindung und pro Konzentration zwei Pflanzen, und eine Auswertung der erzielten Abtötungsrate erfolgte nach weiteren 24 Stunden.

Verbindungen gemäss Beispiel 1 zeigten im obigen Versuch eine positive Wirkung gegen Insekten der Spezies Aphis craccivora und Myzus persicae.

Beispiel 5

Insektizide Frass- und Kontaktwirkung : Anthomonus grandis, Heliothis virescens und Spodoptera littoralis

Baumwollpflanzen wurden mit einer wässrigen Emulsion enthaltend 0,05 % der zu prüfenden Verbindung (erhalten aus einem 25 %igen Spritzpulver) besprüht. Nach dem Antrocknen des Belages wurden die Pflanzen mit Adulten bzw. Larven der Spezies

a) Anthonomus grandis (Adulte),
b) Heliothis virescens (Larven : L 3/L 4 Instar) ; oder
c) Spodoptera littoralis (Larven : L 3 Instar)

besiedelt. Man verwendete für jede Versuchsverbindung und für jede Test-Spezies zwei Pflanzen, und eine Auswertung der erzielten Abtötung erfolgte 2, 4, 24 und 48 Stunden nach Versuchsbeginn.

Der Versuch wurde bei 24 °C und 60 % relativer Luftfeuchtigkeit durchgeführt.

Verbindungen gemäss Beispiel 1 zeigten im obigen Versuch eine gute Wirkung gegen Insekten der erwähnten Spezies.

(Siehe Tabellen, Seite 10 ff.)

| Testverbindungen | Minimalkonzentration in ppm zur 100%igen Abtötung von | | |
|---|---|---|---|
| | Aphis craccivora | Myzus persicae | Spodoptera littoralis (Eier) |
| 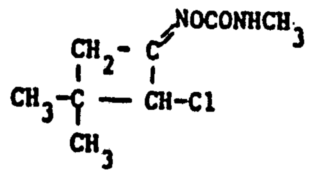 | 100 | 100 | 200 |
| 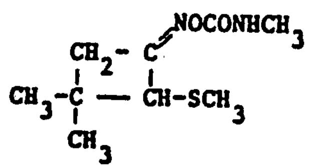 | 200 | 200 | 400 |
| 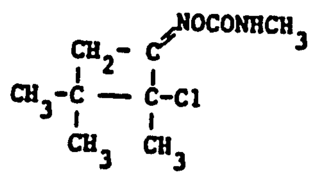 | 100 | 100 | 200 |
| 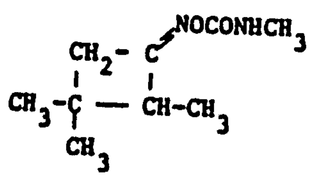 | 200 | 200 | 200 |

| Testverbindungen | Minimalkonzentration in ppm zur 100%igen Abtötung von Aphis craccivora | Myzus persicae | Spodoptera littoralis (Eier) |
|---|---|---|---|
| 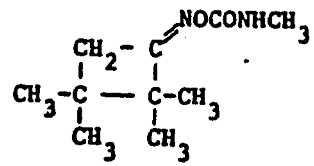 | 200 | 200 | 200 |
| 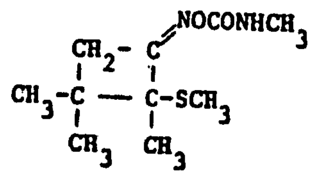 | 200 | 200 | 400 |
| 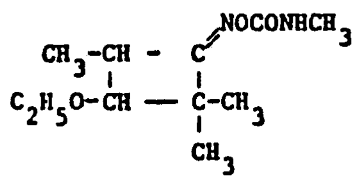 | 100 | 200 | 200 |
| 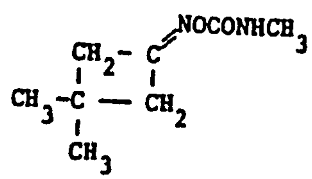 | 100 | 100 | 200 |

**Ansprüche** (für die Vertragsstaaten : BE, CH, DE, FR, GB, IT, LI, NL)

1. Eine Verbindung der Formel

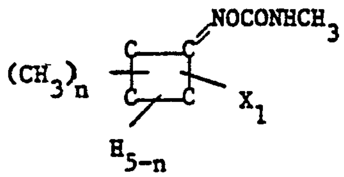

(I)

worin
n die Zahlen 1 bis 5 und
$X_1$ Wasserstoff, Halogen, $C_1$-$C_4$-Alkoxy oder $C_1$-$C_4$-Alkylthio bedeuten.

2. Eine Verbindung gemäss Anspruch 1, worin
n die Zahlen 1 bis 4 und
$X_1$ Wasserstoff, Chlor, Methoxy, Aethoxy oder Methylthio bedeuten.

3. Eine Verbindung gemäss Anspruch 1 der Formel

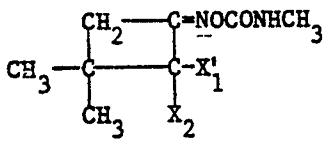

worin
$X_1'$ Wasserstoff, Chlor oder Methylthio und
$X_2$ Wasserstoff oder Methyl bedeuten.

4. Die Verbindung gemäss Anspruch 2 der Formel

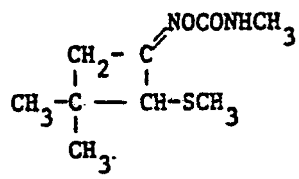

5. Die Verbindung gemäss Anspruch 2 der Formel

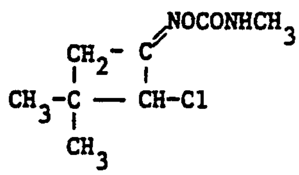

6. Die Verbindung gemäss Anspruch 2 der Formel

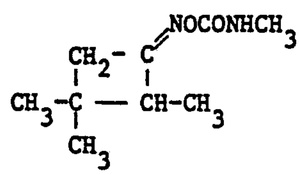

7. Die Verbindung gemäss Anspruch 2 der Formel

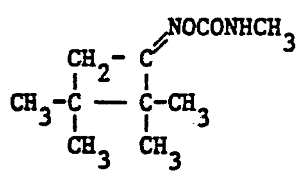

8. Die Verbindung gemäss Anspruch 2 der Formel

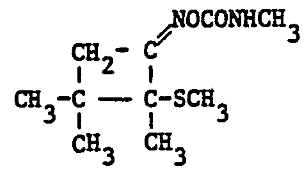

9. Die Verbindung gemäss Anspruch 2 der Formel

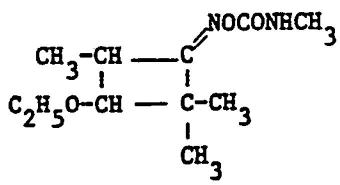

10. Die Verbindung gemäss Anspruch 2 der Formel

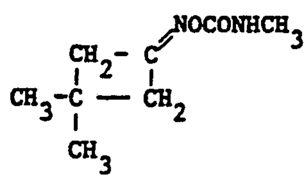

11. Verfahren zur Herstellung von Verbindungen gemäss Anspruch 1, dadurch gekennzeichnet, dass man eine Verbindung der Formel

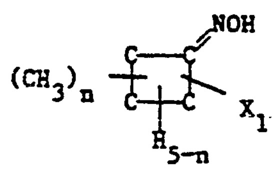

worin n und $X_1$ die im Anspruch 1 angegebene Bedeutung haben, in Gegenwart einer Base mit Methylisocyanat umsetzt.

12. Ein Schädlingsbekämpfungsmittel, welches als aktive Komponente eine Verbindung gemäss Anspruch 1 und geeignete Träger- und/oder andere Zuschlagstoffe enthält.

13. Verwendung einer Verbindung gemäss Anspruch 1 zur Bekämpfung von Tier- und Pflanzen-Schädlingen.

14. Verwendung gemäss Anspruch 13 zur Bekämpfung aller Entwicklungsstadien von Insekten und Vertretern der Ordnung Akarina.

15. Eine Verbindung der Formel

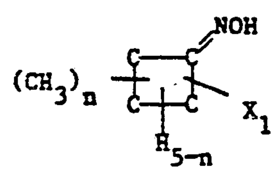

(II)

worin n die Zahlen 1 bis 5 und $X_1$ Wasserstoff, Halogen, $C_1$-$C_4$-Alkoxy oder $C_1$-$C_4$-Alkylthio bedeuten.

**Ansprüche** (für den Vertragsstaat AT)

1. Ein Schädlingsbekämpfungsmittel, insbesondere ein Mittel zur Bekämpfung von Insekten und Vertretern der Ordnung Akarina, dadurch gekennzeichnet, dass es neben 5 bis 99,9 % eines festen oder flüssigen Zusatzstoffes als aktive Komponente 0,1 bis 95 % einer Verbindung der Formel

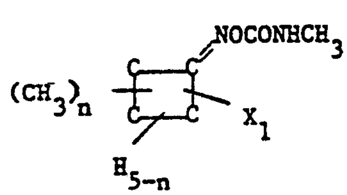

(I)

enthält, worin

n die Zahlen 1 bis 5 und

$X_1$ Wasserstoff, Halogen, $C_1$-$C_4$-Alkoxy oder $C_1$-$C_4$-Alkylthio bedeuten.

2. Ein Mittel gemäss Anspruch 1, welches als aktive Komponente eine Verbindung der Formel (I) enthält, worin n die Zahlen 1 bis 4 und $X_1$ Wasserstoff, Chlor, Methoxy, Aethoxy oder Methylthio bedeuten.

3. Ein Mittel gemäss Anspruch 2, welches als aktive Komponente eine Verbindung der Formel

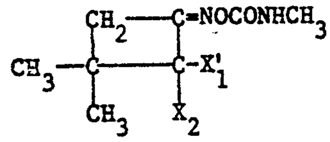

enthält, worin

$X_1'$ Wasserstoff, Chlor oder Methylthio und

$X_2$ Wasserstoff oder Methyl bedeuten.

4. Ein Mittel gemäss Anspruch 3, welches als aktive Komponente die Verbindung der Formel

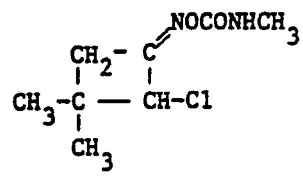

enthält.

5. Ein Mittel gemäss Anspruch 3, welches als aktive Komponente die Verbindung der Formel

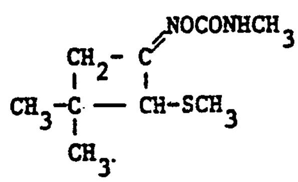

enthält.

6. Ein Mittel gemäss Anspruch 3, welches als aktive Komponente die Verbindung der Formel

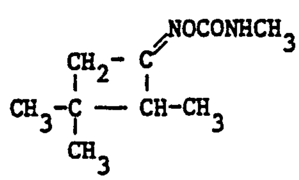

enthält.

7. Ein Mittel gemäss Anspruch 2, welches als aktive Komponente die Verbindung der Formel

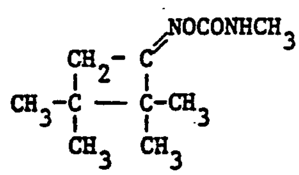

enthält.

8. Ein Mittel gemäss Anspruch 3, welches als aktive Komponente die Verbindung der Formel

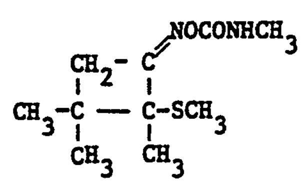

enthält.

9. Ein Mittel gemäss Anspruch 2, welches als aktive Komponente die Verbindung der Formel

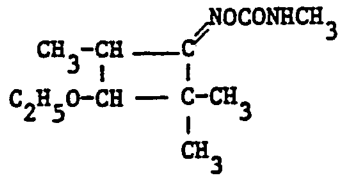

enthält.

10. Ein Mittel gemäss Anspruch 3, welches als aktive Komponente die Verbindung der Formel

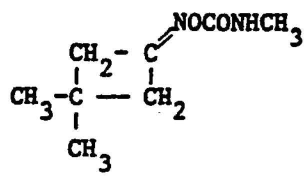

enthält.

**Claims** (for the Contracting States : BE, CH, DE, FR, GB, IT, LI, NL)

1. A compound of the formula

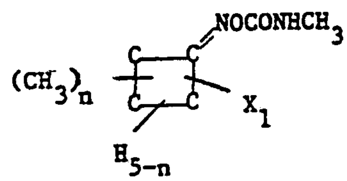

(I)

wherein n is 1 to 5 and $X_1$ is hydrogen, halogen, $C_1$-$C_4$ alkoxy or $C_1$-$C_4$ alkylthio.

2. A compound according to claim 1, wherein n is 1 to 4 and $X_1$ is hydrogen, chlorine, methoxy, ethoxy or methylthio.

3. A compound according to claim 1 of the formula

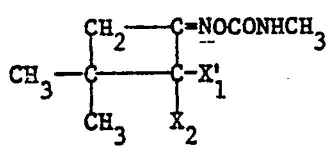

wherein $X_1'$ is hydrogen, chlorine or methylthio, and $X_2$ is hydrogen or methyl.

4. The compound according to claim 2 of the formula

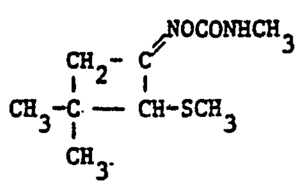

5. The compound according to claim 2 of the formula

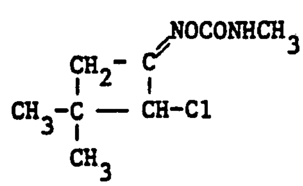

6. The compound according to claim 2 of the formula

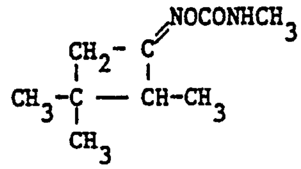

7. The compound according to claim 2 of the formula

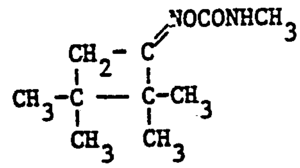

8. The compound according to claim 2 of the formula

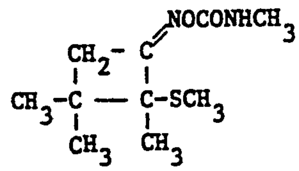

9. The compound according to claim 2 of the formula

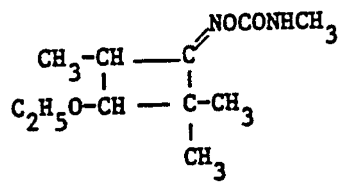

10. The compound according to claim 2 of the formula

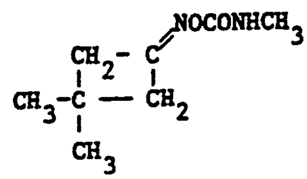

11. A process for the production of a compound according to claim 1, which process comprises reacting a compound of the formula

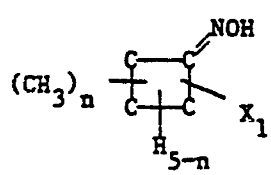

wherein n and $X_1$ are as defined in claim 1, with methyl isocyanate, in the presence of a base.

12. A pesticidal composition which contains, as active component, a compound according to claim 1 together with suitable carriers and/or adjuvants.

13. A method of controlling pests of animals and plants at a locus, which method comprises applying to said locus a pesticidally effective amount of a compound as claimed in claim 1.

14. A method according to claim 13 for controlling all development stages of insects and representatives of the order Acarina.

15. A compound of the formula

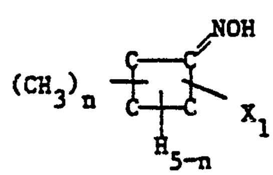

(II)

wherein n is 1 to 5 and $X_1$ is hydrogen, halogen, $C_1$-$C_4$ alkoxy or $C_1$-$C_4$ alkylthio.

**Claims** (for the Contracting State AT)

1. A pesticidal composition, in particular a composition for controlling insects and representatives of the order Acarina, which composition contains, as active component, 0.1 to 95 % of a compound of the formula

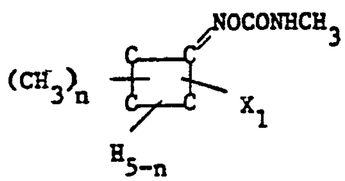

(I)

wherein n is 1 to 5 and $X_1$ is hydrogen, halogen $C_1$-$C_4$ alkoxy or $C_1$-$C_4$ alkylthio, together with 5 to 99.9 % of a solid or liquid adjuvant.

2. A composition according to claim 1, which contains, as active component, a compound of the formula I, wherein n is 1 to 4 and $X_1$ is hydrogen, chlorine, methoxy, ethoxy or methylthio.

3. A composition according to claim 1, which contains, as active component, a compound of the formula

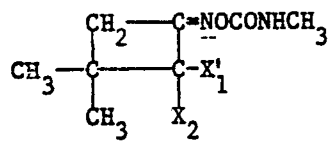

wherein $X_1'$ is hydrogen, chlorine or methylthio, and $X_2$ is hydrogen or methyl.

4. A composition according to claim 3, which contains, as active component, the compound of the formula

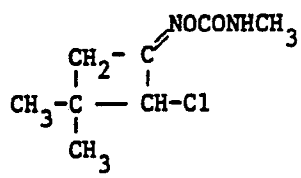

5. A composition according to claim 3, which contains, as active component, the compound of the formula

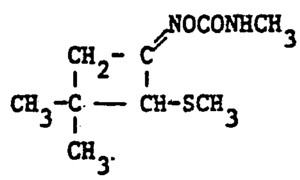

6. A composition according to claim 3, which contains, as active component, the compound of the formula

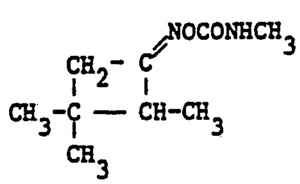

7. A composition according to claim 2, which contains, as active component, the compound of the formula

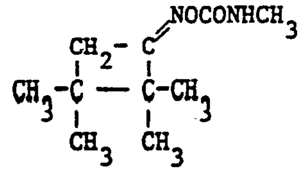

8. A composition according to claim 3, which contains, as active component, the compound of the formula

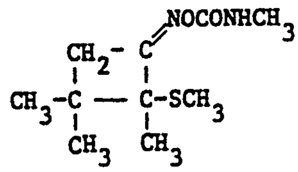

9. A composition according to claim 2, which contains, as active component, the compound of the formula

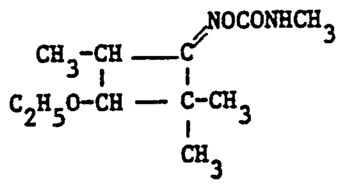

10. A composition according to claim 3, which contains, as active component, the compound of the formula

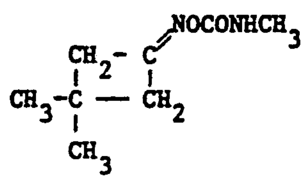

**Revendications** (pour les Etats contractants : BE, CH, DE, FR, GB, IT, LI, NL)

1. Composé de formule

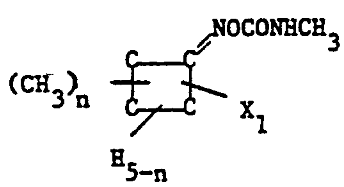

(I)

où n représente le nombre 1 à 5 et $X_1$ représente un hydrogène, un halogène, un alcoxy en $C_1$ à $C_4$ ou un alcoylthio en $C_1$ à $C_4$.

2. Composé selon la revendication 1, où n représente les nombres 1 à 4 et $X_1$ représente un hydrogène, un chlore, un méthoxy, un éthoxy ou un méthylthio.

3. Composé selon la revendication 1 de formule

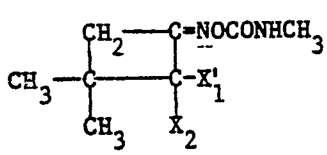

où $X_1'$ représente un hydrogène, un chlore ou un méthylthio et $X_2$ représente un hydrogène ou un méthyle.

4. Composé selon la revendication 2 de formule

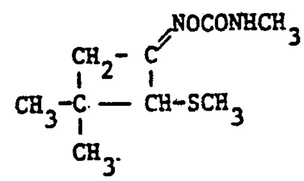

5. Composé selon la revendication 2 de formule

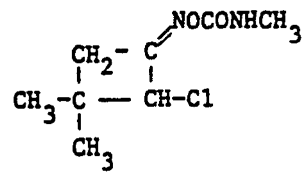

6. Composé selon la revendication 2 de formule

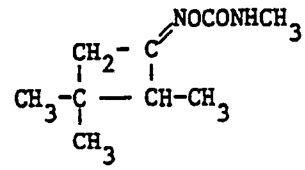

7. Composé selon la revendication 2 de formule

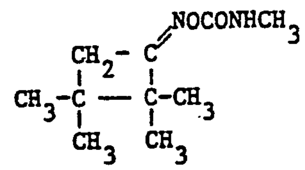

8. Composé selon la revendication 2 de formule

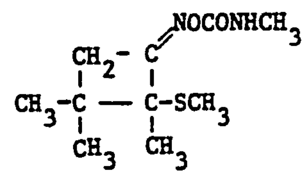

9. Composé selon la revendication 2 de formule

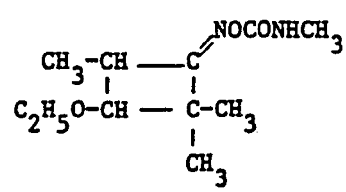

10. Composé selon la revendication 2 de formule

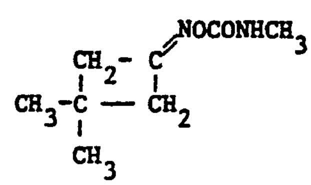

11. Procédé de préparation de composés selon la revendication 1, caractérisé en ce qu'on fait réagir un composé de formule

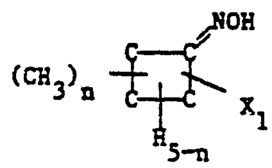

où n et $X_1$ ont la signification donnée dans la revendication 1, en présence d'une base avec de l'isocyanate de méthyle.

12. Agent de lutte anti-parasitaire contenant comme composant actif un composé selon la revendication 1 et des supports et/ou autres additifs appropriés.

13. Application d'un composé selon la revendication 1 à la lutte contre les parasites animaux et végétaux.

14. Application selon la revendication 13 à la lutte contre tous les stades de développement des insectes et représentants de l'ordre des acariens.

15. Composé de formule

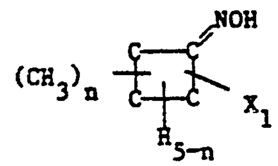

(II)

où n représente les nombres 1 à 5 et $X_1$ représente un hydrogène, un halogène, un alcoxy en $C_1$ et $C_4$ ou un alcoylthio en $C_1$ à $C_4$.

**Revendications** (pour l'Etat contractant AT)

1. Agent de lutte antiparasitaire, en particulier agent de lutte contre les insectes et les représentants de l'ordre des acariens, caractérisé en ce qu'il contient, outre de 5 à 99,9 % d'un additif solide ou liquide, comme composant actif de 0,1 à 95 % d'un composé de formule

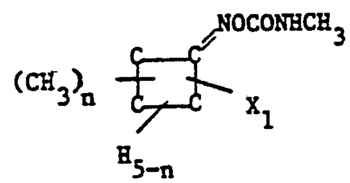

(I)

où n représente les nombres 1 à 5 et $X_1$ représente un hydrogène, un halogène, un alcoxy en $C_1$ à $C_4$ ou un alcoylthio en $C_1$ à $C_4$.

2. Agent selon la revendication 1 qui contient comme composant actif un composé de formule (I), où n représente les nombres 1 à 4 et $X_1$ représente un hydrogène, un chlore, un méthoxy, un éthoxy ou un méthylthio.

3. Agent selon la revendication 2, qui contient comme composant actif un composé de formule

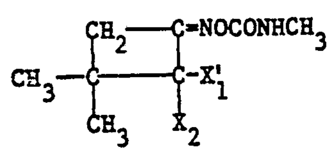

où $X_1'$ représente un hydrogène, un chlore ou un méthylthio et $X_2$ représente un hydrogène ou un méthyle.

4. Agent selon la revendication 3, qui contient comme composant actif le composé de formule

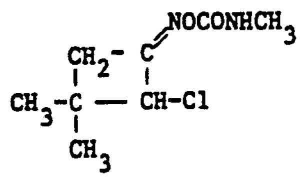

5. Agent selon la revendication 3, qui comprend comme composant actif le composé de formule

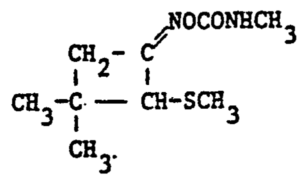

6. Agent selon la revendication 3, contenant comme composant actif le composé de formule

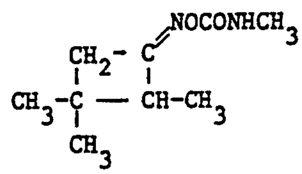

7. Agent selon la revendication 2, qui contient comme composant actif le composé de formule

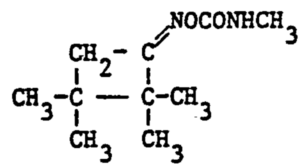

8. Agent selon la revendication 3, qui contient comme composant actif le composé de formule

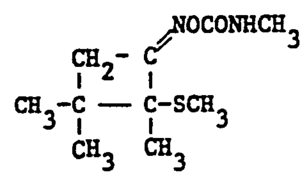

9. Agent selon la revendication 2, qui contient comme composant actif le composé de formule

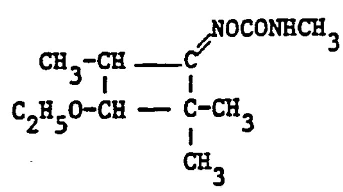

10. Agent selon la revendication 3, qui contient comme composant actif le composé de formule